Europäisches Patentamt

European Patent Office

Office européen des brevets

(19)

(11) **EP 0 710 179 B1**

(12) **EUROPÄISCHE PATENTSCHRIFT**

(45) Veröffentlichungstag und Bekanntmachung des Hinweises auf die Patenterteilung:
**26.02.1997 Patentblatt 1997/09**

(21) Anmeldenummer: **94924769.6**

(22) Anmeldetag: **15.07.1994**

(51) Int. Cl.$^6$: **B32B 27/28**, B32B 27/30,
C08L 23/08, C08L 23/02

(86) Internationale Anmeldenummer:
**PCT/EP94/02335**

(87) Internationale Veröffentlichungsnummer:
**WO 95/03174 (02.02.1995 Gazette 1995/06)**

(54) **MEHRSCHICHTIGE KUNSTSTOFFBAHNEN ODER -PLATTEN MIT TRANSPARENTER DECKSCHICHT**

MULTI-LAYER PLASTIC WEBS OR PLATES WITH A TRANSPARENT COATING

BANDES OU PLAQUES DE PLASTIQUE MULTICOUCHES POURVUES D'UNE COUCHE DE RECOUVREMENT TRANSPARENTE

(84) Benannte Vertragsstaaten:
**AT BE CH DE DK ES FR GB GR IT LI NL SE**
Benannte Erstreckungsstaaten:
**SI**

(30) Priorität: **19.07.1993 DE 4324137**

(43) Veröffentlichungstag der Anmeldung:
**08.05.1996 Patentblatt 1996/19**

(73) Patentinhaber: **DLW Aktiengesellschaft**
**D-74321 Bietigheim-Bissingen (DE)**

(72) Erfinder:
• **MAUK, Hanns**
**D-74395 Mundelsheim (DE)**

• **VON OLNHAUSEN, Heinz**
**D-74321 Bietigheim-Bissingen (DE)**

(74) Vertreter: **Müller-Boré & Partner**
**Patentanwälte**
**Grafinger Strasse 2**
**81671 München (DE)**

(56) Entgegenhaltungen:
EP-A- 0 212 575          EP-A- 0 213 441
EP-A- 0 247 580          EP-A- 0 353 068
EP-A- 0 386 514          EP-A- 0 617 083
DE-A- 3 626 349          DE-U- 8 634 932

**Beschreibung**

Die vorliegende Erfindung betrifft mehrschichtige Bodenbelags-Kunststoffbahnen oder -platten (im folgenden kurz Kunststoffbahnen genannt) mit transparenter Deckschicht, Verfahren zu ihrer Herstellung sowie deren Verwendung.

Unter mehrschichtigen Kunststoffbahnen oder -platten i.S.d. vorliegenden Erfindung werden Flächengebilde verstanden, die aus mehreren, übereinander angeordneten Schichten bestehen.

Mehrschichtige Kunststoffbahnen auf Polyvinylchlorid (PVC)-Basis, mit einer transparenten Deckschicht als Nutzschicht, finden seit Jahrzehnten Anwendung als Bodenbeläge. Solche mehrschichtigen Kunststoffbannen weisen beispielsweise folgenden Aufbau auf:

- transparente Deckschicht (Klarschicht) (Dicke 0,2 bis 0,8 mm)
- Zwischenschicht, ggf. gefärbt und/oder gemustert (Dicke 0,2 bis 0,4 mm)
- Unterschicht, Farbe beliebig (Dicke 1,0 bis 2,5 mm)
- ggf. Schallschutzschicht z.B. aus geschäumtem Kunststoff, Kork oder Korkment (Dicke 1,5 bis 2,0 mm).

Zur Darstellung einer Musterung kann wahlweise entweder die Deckschicht (Klarschicht) ein- oder mehrfarbig hinterdruckt und/oder die Zwischenschicht ein- oder mehrfarbig bedruckt werden. Dies kann in kostengünstiger Weise mit einem Tiefdruckverfahren erreicht werden.

Neben diesen mehrschichtigen (heterogenen) Kunststoffbahnen sind auch sogenannte homogene Kunststoffbahnen bekannt, d.h. einschichtig ausgebildete Kunststoffbahnen, bei denen alle Komponenten derart miteinander vermischt sind, daß sie gleichbleibende (homogene) Eigenschaften über den gesamten Querschnitt der Kunststoffbahnen von der Oberseite bis zur Unterseite aufweisen.

Bei homogenen Kunststoffbahnen wird eine Musterung durch Verwendung verschiedenfarbiger Granulate erreicht. Üblicherweise werden die das polymere Bindemittel, Pigment(e), Füllstoffe und ggf. Hilfsstoffe enthaltenden Granulate in Verdichtungsaggregaten, wie z.B. Kalandern, Doppelbandpressen oder statischen Pressen zu einer Kunststoffbahn oder -platte verarbeitet. Herstellungsbedingt ist jedoch bei den homogenen Kunststoffbahnen nur eine mehr oder weniger längsgerichtete farbige Musterung erhältlich, wodurch man in der Musterwahl stark eingeschränkt ist. Daneben ist es äußerst kostenintensiv, bereits bestehende Produktionsanlagen so umzurüsten, daß homogene Kunststoffbahnen mit abgewandelten Mustern entstehen, soweit dies im Rahmen der Herstellung homogener Kunststoffbahnen überhaupt möglich ist. Solche Muster- und Farbänderungen sind jedoch notwendig, um auf die wechselnden Bedürfnisse des Marktes zu reagieren.

Gegenüber den homogenen Kunststoffbahnen mit durchgehender, längsgerichteter Musterung weisen die mehrschichtigen (heterogenen) Kunststoffbahnen mit transparenter Deckschicht den Vorteil auf, daß man bei ihrer Herstellung völlige Freiheit bezüglich der Farb- und Musterwahl hat, denn das Muster kann in vielfältiger Weise durch Hinterdrucken der transparenten Deckschicht und/oder Bedrucken der obersten Zwischenschicht erzeugt werden.

Ein weiterer Vorteil gegenüber homogenen Kunststoffbahnen ist bei den mehrschichtigen Kunststoffbahnen darin zu sehen, daß lediglich die Deckschicht und die oberste Zwischenschicht farbkonstant sein müssen, um Kunststoffbahnen mit gleichbleibenden Farben zu erhalten. Alle darunter liegenden Schichten können von beliebiger, auch wechselnder Farbe sein, so daß es möglich ist, in diese Unterschicht Produktionsabfälle der Kunststoffbahnen oder auch Recyclingmaterial einzuarbeiten.

Wie eingangs erwähnt, sind Bodenbeläge auf PVC-Basis, mit einer transparenten Deckschicht als Nutzschicht, seit langem im Handel. In den letzten Jahren ist jedoch die Entsorgung von PVC oder PVC-haltigen Kunststoffmaterialien zunehmend problematischer geworden, da der Chlorgehalt des PVC bei der Deponierung ein Gefahrenpotential darstellt und bei der Verbrennung von PVC Chlorwasserstoff freigesetzt wird, der die Verbrennungsanlagen korrodiert und gesundheitsschädlich ist.

Bodenbeläge auf PVC-Basis enthalten außerdem stets auch einen Weichmacher. Dieser Gehalt an Weichmacher bringt weitere Nachteile mit sich, da der Weichmacher in den Klebstoff migrieren kann, mit dem der Bodenbelag verklebt wurde, so daß die Haftfestigkeit herabgesetzt wird. Der Weichmacher kann auch ausschwitzen, wodurch der Bodenbelag zu einem schwer zu reinigenden Schmutzfänger wird und der Weichmacher stellt ein Kanalisationssystem für migrierende Farbstoffe dar, wodurch Verfärbungen entstehen, die sich nicht mehr entfernen lassen. Flüchtige Weichmacher stellen überdies ein weiteres Problem für die Umwelt dar.

Aus den Vorgenannten Gründen wurden umweltfreundliche Kunststoffe als Ersatz für PVC gesucht, mit denen Produkte, z.B. mehrschichtige Bodenbeläge, hergestellt werden können, die ähnlich gute Eigenschaften besitzen, wie die auf PVC-Basis hergestellten, jedoch deren Nachteile nicht aufweisen. In Frage kommen dafür in erster Linie Kunststoffe auf der Basis von olefinischen Polymeren, wie z.B. Polyethylen (PE), Polypropylen (PP), Ethylen-Propylen-Copolymerisate, sowie Copolymerisate des Ethylen mit anderen olefinischen ungesättigten Verbindungen.

So wird beispielsweise in EP-B1-0 321 760 zur Herstellung von homogenen, PVC-freien Kunststoffbahnen vorgeschlagen, ein Ethylen-Vinylacetat (EVA)-Copolymer als polymeres Bindemittel zu verwenden.

Auch in DE-A1-41 14 085 wird ein PVC-freier Fußbodenbelag vorgeschlagen, bei dem homogene Kunststoffbahnen hergestellt werden, die ein EVA-Copolymer vorzugsweise zusammen mit einem Polyolefin als Bindemittel enthalten. Diese Bahnen können dubliert oder tripliert werden.

Ferner wird in DE-C1-41 27 107 ein mehrschichtiger PVC-freier Fußbodenbelag vorgeschlagen, wobei ein Fußbodenbelag auf EVA-Basis mit einer transparenten Folie aus einem linearen Ethylencopolymer niedriger Dichte und/oder sehr niedriger Dichte dubliert bzw. tripliert wird.

Aus EP-A-0 213 441 ist eine Folie oder Folienbahn für Möbel bekannt, die aus mindestens zwei Schichten besteht, nämlich einer Polyolefinfolie und einer Oberflächenschicht, die über der Polyolefinfolie angeordnet ist. Die Polyolefinfolie kann bis zu 30 Gewichtsteile eines Ethylen-Acrylsäureester-Acrylsäureterpolymerisats enthalten.

Aus EP-A-0 353 068 ist ein Überzugsfilm aus einer Grundschicht und einer Substratschicht bekannt. Die Substratschicht besteht aus einer Harzzusammensetzung, die 10 bis 95 Gew.-% eines Ethylen-Copolymers umfaßt, welches ein Ethylen-Methylacrylat-Copolymer, Ethylen-Ethylacrylat-Copolymer, Ethylen-Butylacrylat-Copolymer oder Ethylen-2-Ethylhexylacrylat-Copolymer sein kann. Auf die Substratschicht kann ein Metall aufgedampft werden. Der Überzugsfilm, auf dem das Metall abgeschieden ist, hat eine breite Anwendung, z.B. als Verpackungsmaterial.

EVA-Copolymere sind zwar relativ preisgünstig und sind in ihrer Anwendung so variabel, daß sie in praktisch allen Schichten einer mehrschichtigen Kunststoffbahn eingesetzt werden können Damit kann eine mehrschichtige Kunststoffbahn aus Schichten mit möglichst homogener Polymerzusammensetzung aufgebaut werden. Dies ist aus Gründen des produktionsinternen Recyclings von Randstreifen, Anfahrabfällen etc. der einzelnen Schichten von Bedeutung.

Andererseits weisen EVA-Copolymere jedoch erhebliche Nachteile auf.

Nach der Liste der maximalen Arbeitsplatzkonzentrationen (aus: Das neue Chemikaliengesetz, Handbuch der gefährlichen Stoffe, Eberhard Quellmalz, Weka-Verlag, Februar 1992) wird Vinylacetat in die krebserzeugende Gruppe IIIB eingestuft. Somit können sich erhebliche Probleme und Risiken bei der Herstellung von EVA-enthaltenden Kunststoffbahnen oder - platten und deren Verwendung als Bodenbeläge ergeben, insbesondere im Hinblick auf die ständig sich verschärfenden Sicherheitsvorschriften.

Der Restmonomergehalt von Vinylacetat liegt bei handelsüblichen EVA-Polymeren im Bereich von 0,1 bis 0,5 Gew.-%. Dieser Vinylacetatanteil läßt sich durch nachfolgende Behandlung, z.B. Stripp-Verfahren, nicht weiter vermindern. Somit kann es zu erheblichen Belastungen in unzureichend belüfteten Räumen kommen, da aus Bodenbelägen, die handelsübliche EVA-Polymere enthalten, langsam und kontinuierlich Vinylacetat abgegeben wird.

EVA zeigt eine relativ geringe thermische Stabilität, d.h. EVA neigt dazu, bei höheren Temperaturen Essigsäure abzuspalten. Die merkliche Essigsäure-Abspaltung setzt für EVA schon oberhalb ca. 180 °C ein. Somit ergeben sich Probleme, wenn andere Polymere wie z.B. hochschmelzende isotaktische Polypropylene zugegeben werden sollen, um mechanische Eigenschaften (Verschleißfestigkeit, Härte) zu verbessern, da bei den dann nötigen höheren Verarbeitungstemperaturen bereits die Essigsäure-Abspaltung beginnt. Diese Essigsäure-Abspaltung beeinflußt die Eigenschaften des EVA und somit auch die Eigenschaften der Bodenbeläge, die EVA enthalten, negativ, da in den Polymerketten Doppelbindungen erzeugt werden, die oxidativ angegriffen werden können und zu einem Abbau des Polymeren führen.

Als Alternative zu den EVA-Copolymeren eignen sich insbesondere Ethylen-Copolymere niedriger Dichte (Dichtebereich etwa 0,915-0,935 g/cm$^3$), wie z.B. Copolymere des Ethylen und Buten oder Octen-(1). Diese Ethylen-Copolymeren niedriger Dichte gestatten ebenso wie EVA-Copolymere eine außerordentlich hohe Füllung mit üblichen Füllstoffen in Verbindung mit steuerbarer Flexibilität und Härte. Jedoch weisen derartige Ethylen-Copolymere niedriger Dichte ausgeprägte olefinische Eigenschaften auf; sie sind beispielsweise sehr unpolar. Diese olefinischen Eigenschaften wirken sich u.a. negativ auf die Verklebbarkeit der solche Ethylen-Copolymere enthaltenden mehrschichtigen Kunststoffbahn aus. Außerdem ist es problematisch, solche Kunststoffbahnen, wie bei Bodenbelägen üblich, mit einem Finish oder einem Lack zu versehen, um ihr Anschmutzverhalten und ihre Verschleißeigenschaften zu verbessern, da die Haftung zwischen der Kunststoffbahn und dem Finish oder dem Lack ungenügend ist.

Aufgabe der vorliegenden Erfindung ist es daher, mehrschichtige Bodenbelags-Kunststoffbahnen oder -platten, insbesondere solche mit einer transparenten Deckschicht, bereitzustellen, die PVC- und EVA-frei sind und keinen Weichmacher enthalten. Diese Kunststoffbahnen sollen ferner die vorteilhaften Eigenschaften bekannter mehrschichtiger Kunststoffbahnen oder -platten besitzen, ohne jedoch deren vorgenannte Nachteile aufzuweisen.

Eine weitere Aufgabe ist es, ein Verfahren zur Herstellung dieser mehrschichtigen Bodenbelags-Kunststoffbahnen oder -platten anzugeben.

Diese Aufgaben werden durch in den Patentansprüchen definierten Bodenbelags-Kunststoffbahnen oder -platten und das Verfahren zu ihrer Herstellung gelöst.

Die erfindungsgemäßen Bodenbelags-Kunststoffbahnen oder -platten bestehen aus einer Deckschicht und mindestens einer weiteren Schicht, wobei mindestens eine der Schichten mindestens ein Ethylen-Alkylacrylat-Copolymer enthält. Vorzugsweise ist die Deckschicht transparent und weist einen Anteil an Ethylen-Alkylacrylat-Copolymer auf.

Überraschenderweise wurde gefunden, daß die erfindungsgemäßen Bodenbelags-Kunststoffbahnen oder -platten, die PVC- und EVA-frei sind und keinen Weichmacher enthalten, dennoch eine ausgezeichnete Flexibilität und Verschleißfestigkeit aufweisen. Ferner haben sie den Vorteil, daß bei ihrer Verarbeitung höhere Temperaturen, beispielsweise Temperaturen von oberhalb etwa 180 °C, ohne Beeinträchtigung der Polymereigenschaften angewendet werden können. Dies ist vorteilhaft, da somit zur Optimierung der mechanischen Eigenschaften der Kunststoffbahnen, wie z.B. Verschleißfestigkeit, hochschmelzende Polymere, wie isotaktische Polypropylen-Typen zugesetzt werden können, ohne daß, wie im Falle der Verwendung von EVA-Copolymeren, Essigsäure abgespalten wird. Ein weiterer Vorteil der erfindungsgemäßen mehrschichtigen Bodenbelags-Kunststoffbahnen ist ihre vergleichsweise geringe Wasseraufnahme, die sich auf die Maßstabilität und damit auf die Gebrauchseigenschaften günstig auswirken, da eine höhere Wasseraufnahme zu einem Quellen der Kunststoffbahnen führt, wodurch Blasen und Risse in den Klebefugen entstehen können. Diese beeinträchtigen die Haftfestigkeit und bieten Angriffsflächen für Schmutz.

Schließlich wurde überraschenderweise gefunden, daß die erfindungsgemäßen mehrschichtigen Bodenbelags-Kunststoffbahnen ausgezeichnet mit polymerreichen Dispersionen, wie sie in Bodenpflegemitteln enthalten sind, eingepflegt werden können. Dies bedeutet, daß die Pflegemittel in einer gewünschten Schichtdicke sehr gut auf den Kunststoffbahnen haften und über einen ausreichend langen Zeitraum den Bodenbelag schützen. Dies ist möglicherweise auf die Erhöhung der Polarität der Kunststoffoberfläche der Bahnen oder -platten durch die Anwesenheit der polaren Gruppen in den erfindungemäß verwendeten Ethylen-Alkylacrylat-Copolymeren zurückzuführen.

Die erfindungsgemäßen Bodenbelags-Kunststoffbahnen können auch mit einem üblichen werksseitig aufgebrachten Finish versehen werden, das ebenfalls ausgezeichnet haftet. Bodenbeläge aus Kunststoffmaterialien werden häufig auch auf ihrer Nutzseite zur Verbesserung der Gebrauchseigenschaften mit einem Lack versehen. Auch hierzu sind die erfindungsgemäßen Kunststoffbahnen hervorragend geeignet, da auch ein derartiger Lack ausgezeichnet haftet, ohne daß es einer besonderen Vorbehandlung der Kunststoffbahnen bedarf. Ein geeigneter Lack kann für diese Zwecke ein üblicher lösungsmittelfreier Zweikomponentenlack sein. Vorzugsweise ist der Lack ein lösungsmittelfreier, durch aktinische Strahlung (z.B. UV-Licht) härtbarer Lack. Allerdings kann es bei einem niederen Gehalt an Ethylen-Alkyacrylat-Copolymer in der Deckschicht vorteilhaft sein, die Oberfläche der Kunststoffbahn vor dem Aufbringen des Finishs oder Lacks einer Koronaentladung zu unterziehen.

Die Behandlung der Rückseite der Deckschicht bzw. der Oberseite der unter der Deckschicht angeordneten Zwischenschicht mit einer Koronaentladung ist auch vorteilhaft, wenn die vorgenannten Seiten der Schichten mit einem Muster bedruckt werden sollen.

Die erfindungsgemäß verwendeten Ethylen-Alkylacrylat-Copolymeren können Bestandteil jeder der Schichten der mehrschichtigen Bodenbelags-Kunststoffbahnen oder -platten sei. Im Falle der transparenten Deckschicht kann der Gehalt im Bereich von etwa 5-70 Gew.-%, bezogen auf das Gewicht der Deckschicht betragen, vorzugsweise 10-50 Gew.-% und mehr bevorzugt 20-30 Gew.-%. In den anderen Schichten als der transparenten Deckschicht enthalt das polymere Bindemittel 20-80 Gew.-%, bevorzugt 40-70 Gew.-% und besonders bevorzugt 60-70 Gew.-% mindestens eines Ethylen-Alkylacrylat-Copolymers, bezogen auf das Gewicht des polymeren Bindemittels.

Der Anteil des Alkylacrylats im Ethylen-Alkylacrylat-Copolymeren beträgt dabei etwa 4-30 Gew.-%, vorzugsweise 10-15 Gew.-%. Der Alkylacrylatgehalt hängt von den gewünschten Eigenschaften der Schicht ab. Je höher der Gehalt an Alkylacrylat im Ethylen-Alkylacrylat-Copolymer ist, desto weicher und flexibler wird das Copolymer.

Die anderen Schichten als die transparente Deckschicht der erfindungsgemäßen Bodenbelags-Kunststoffbahnen oder -platten enthalten 20-60 Gew.-%, bevorzugt 30-50 Gew.-%, besonders bevorzugt 35-45 Gew.-% polymeres Bindemittel.

In den erfindungsgemäßen Bodenbelags-Kunststoffbahnen oder -planen ist das Alkylacrylat im Ethylen-Alkylacrylat-Copolymer vorzugsweise ein Methylacrylat, Ethylacrylat, Butylacrylat oder ein beliebiges Gemisch dieser Copolymeren, besonders bevorzugt ist Ethylacrylat, da es weniger geruchsintensiv als z.B. Butylacrylat ist Das Ethylen-Alkylacrylat-Copolymer ist somit vorzugsweise ein Copolymer, das durch Copolymerisation von Ethylen mit einem Alkylacrylat, ausgewählt aus Methylacrylat, Ethylacrylat, Butylacrylat oder jede beliebige Mischung davon erhalten wurde. Diese Copolymeren können in an sich bekannter Weise hergestellt werden, vorzugsweise durch Hochdruckpolymerisation aus der Gasphase.

Die erfindungsgemäß verwendeten Ethylen-Alkylacrylat-Copolymeren können sowohl statistische Copolymere als auch Blockcopolymere sein, wobei statistische Copolymere bevorzugt sind.

Wie vorstehend erwähnt, verleiht die Anwesenheit von mindestens einem Ethylen-Alkylacrylat-copolymeren der transparenten Deckschicht der erfindungsgemäßen mehrschichtigen Bodenbelags-Kunststoffbahnen eine ausgezeichnete Verträglichkeit und Haftung mit polymerreichen Dispersionen, wie sie z.B. in Bodenpflegemitteln enthalten sind, sowie mit Finishs oder Lacken. Überdies ist die Abriebfestigfestigkeit und Verschleißfestigkeit deutlich verbessert. Die Anwesenheit eines oder mehrerer Ethylen-Alkylacrylat-Copolymeren in der Deckschicht beeinträchtigt auch die Transparenz dieser Schicht im wesentlichen nicht, so daß problemlos jedes beliebige Muster auf die Unterseite der Deckschicht bzw. die Oberseite der darunterliegenden Zwischenschicht gedruckt werden kann und dieses Muster vom Betrachter praktisch unverfälscht wahrgenommen werden kann. Dies ist ein großer Vorteil der mehrschichtigen Kunststoffbahnen mit transparenter Deckschicht gegenüber den homogenen Kunststoffbahnen.

Neben dem Ethylen-Alkylacrylat-Copolymeren können zur Optimierung der Gebrauchseigenschaften der Kunststoffbahnen in der Deckschicht weitere Polymere eingesetzt werden. Zur Steuerung der Härteeigenschaften können kristalline, isotaktische Polypropylen-Typen oder Polypropylencopolymere zugegeben werden. Desweiteren kann das Polymer oder Polymergemisch der Deckschicht zur Optimierung von Eigenschaften, wie Härte, Eindruckfestigkeit,

EP 0 710 179 B1

Abriebfestigkeit, Widerstand gegen Anschmutzung etc. durch Zugabe von beispielsweise Ethylen- und Propylen-Homo- und Copolymeren, Randomcopolymeren von Ethylen und Propylen, Ethylen-Propylen-Kautschuke (EPM), Ethylen-Propylen-Dien-Terpolymere (EPDM), Styrol-Isopren-Stytrol (SIS)- und/oder Styrol-Butadien-Styrol (SBS)-Blockcopolymere, sowie Copolymere von Ethylen mit mindestens einem weiteren Alken mit bis zu 10 Kohlenstoffatomen, wie Octen, modifiziert werden. Zur Erhöhung der Zähigkeit kann vorzugsweise ein hochmolekulares und/oder ultrahochmolekulares Polyethylen hoher Dichte (PE-HMW bzw. PE-UHMW) zugegeben werden.

Gegebenenfalls können der Deckschicht übliche Hilfsmittel, wie beispielsweise Antioxidantien, Antistatika, Gleitmittel und Bearbeitungshilfsmittel zugegeben werden. Dabei sind Antioxidantien und Antistatitika, insbesondere in der transparenten Deckschicht, zu empfehlen, um einerseits die Kunststoffbahnen vor oxidativem Abbau zu schützen und andererseits statische Aufladungen zu verhindern, die bei der Herstellung der Kunststoffbahnen unangenehm sind und beim späteren Gebrauch der Kunststoffbahnen deren Anschmutzverhalten negativ beeinflußen.

Ferner können der Deckschicht Pigmente und Farbstoffe zugegeben werden, um bereits vor dem Bedrucken eine Grundstruktur oder einen Grundfarbton zu erzeugen.

Das Hinterdrucken der Deckschicht bzw. das Bedrucken der darunterliegenden Schicht kann in üblicher Weise erfolgen, beispielsweise im halbautotypischen Tiefdruck mit gravierten Zylindern, wobei eine Vorbehandlung der Oberflächen mit einer Koronaentladung bevorzugt ist.

Für die anderen Schichten als die transparente Deckschicht der erfindungsgemäßen mehrschichtigen Bodenbelags-Kunststoffbahnen kommen als Polymere grundsätzlich alle Polymere in Frage, die auch in der transparenten Deckschicht verwendet werden können, sowie Homo- oder Copolymere von ethylenisch ungesättigten Verbindungen oder ein beliebiges Gemisch davon.

Diese anderen Schichten (Zwischenschicht, Unterschichten) können weiterhin übliche Füllstoffe, wie z.B. Kreide, Kaolin, Talkum, Holzmehl, Quarzmehl, Dolomit, Kieselerde, Schwerspat und Schiefermehl oder ein beliebiges Gemisch davon aufweisen, wobei der Anteil der Füllstoffe, bezogen auf die jeweilige Schicht 40-80 Gew.-%, bevorzugt 50-70 Gew.-% und besonders bevorzugt 60-65 Gew.-% beträgt.

Im übrigen können den weiteren Schichten die Hilfsmittel, sowie Pigmente und Farbstoffe zugegeben werden, wie sie für die Deckschicht beschrieben sind. Dadurch, daß man bei der Zwischenschicht und jeder ggf. vorhandenen weiteren Schicht (Unterschicht) hinsichtlich der Farbe nicht gebunden ist, kann diesen Schichten, insbesondere den Unterschichten Recyclatmaterial zugegeben werden. Dabei kann es sich um Abfälle aus der laufenden Produktion, sogenannter Neumasse-Abfall, wie Randabschnitte der Bahnen oder Anfahrabfälle handeln, oder auch um Material, das im Wege des Recycling von Kunststoffabfällen erhalten wurde. Die Zusatzmenge an Recyclat richtet sich nach der Art des Materials und es kann nur soviel Recyclat zugegeben werden, daß die geforderten Materialeigenschaften der Kunststoffbahnen erfüllt werden.

Gegebenenfalls können die erfindungsgemäßen Bodenbelags-Kunststoffbahnen oder -platten mit einem Vlies oder Armierungsgewebe versehen werden, das beispielsweise zwischen die Zwischenschicht und die nächste Unterschicht eingebracht wird, um der Kunststoffbahn eine noch höhere Festigkeit und Dimensionsstabilität zu verleihen.

Die erfindungsgemäßen Bodenbelags-Kunststoffbahnen können an der Unterseite mit einer Wärme- und/oder Schallschutzschicht versehen werden, die z.B. aus einem geschäumten Kunststoff, einem Vlies ausreichender Dicke, einem textilen Gewebe, Kork oder Korkment besteht.

Die erfindungsgemäßen Bodenbelags-Kunststoffbahnen oder -planen werden hergestellt, indem die einzelnen Schichten (Folien) separat gefertigt und anschließend miteinander in bekannter Weise verschweißt werden.

Zur Herstellung der einzelnen Folien wird das polymere Bindemittel und die ggf. eingesetzten Hilfsmittel, Füllstoffe, Recyclatmaterial u.ä. vorgemischt und über Aggregate, wie z.B. Innenmischer, Zweiwellenextruder, Planetwalzenextruder oder Walzwerk plastifiziert. Nachfolgend wird die plastifizierte Masse mit geeigneten Maschinen, wie Kalandern oder Doppelbandpressen ggf. zusammen mit einem Vlies oder Armierungsgewebe zu der Schicht gewünschter Dicke verarbeitet. Danach können die entsprechenden Schichten hinterdruckt bzw. bedruckt werden. Das Verbinden der einzelnen Folien durch Verschweißen erfolgt dann beispielsweise mittels einer Auma oder einer Doppelbandpresse mit Kühlzone, wobei letztere wegen der Reduzierung von Klebeproblemen an der Maschine bevorzugt ist. Gleichzeitig oder anschließend kann, sofern dies gewünscht ist, auf der Unterseite der Kunststoffbahn eine Wärme- und/oder Schallschutzschicht in üblicher Weise aufgebracht werden.

Die erfindungsgemäßen mehrschichtigen Bodenbelags-Kunststoffbahnen wurden u.a. folgenden Tests unterworfen:

1. Walkbeständigkeit im Kugelwalk-Versuch (Prüfvorschrift für elastische Beläge gemäß DLW AG-interner Werksnorm):

Diese Prüfung dient (unter Bezugnahme auf DIN 16 952 T 1-5, DIN 16 851, DIN 18 173) zur Ermittlung des Verhaltens von Verbundbelägen bei Schied- und Walkbewegungen, ähnlich einer Rollstuhlbeanspruchung. Die Prüfung erfolgt mittels eines Verschleißprüfgeräts "Stuttgart" gemäß DIN 51 963, das derart modifiziert wurde, daß das Belastungsgewicht 34 kg beträgt, die Kugel einen Durchmesser von 20 mm aufweist, ein Kühlgebläse vorhanden ist, und ein Walksegment ohne Pendelbewegung verwendet wird. Ein Prüfling (190 x 190 mm) mit einer Dicke der jeweils erhaltenen Kunststoffbahn oder -platte wurde mit doppelseitigem Klebeband auf eine Aluplatte aufgeklebt. Vor der Prüfung wurde der Prüfling in einem Klimatisiergestell im Normalklima (DIN 50 014-23/50-2) mindestens 24 Stunden gelagert. Bei der Durchführung der Prüfung wird der Prüfling auf dem Drehteller der Abriebmaschine festgespannt und das Zählwerk auf 1000 Doppelwalkhübe eingestellt. Die Durchführung erfolgt unter Kühlung (Kühlgebläse). Als Maßstab für die Bewertung gilt die Anzahl der erzielten Doppelwalkhübe bis zur Blasenbildung. Mindestanforderung für die Güte "stuhlrollengeeignet" ist, daß mindestens 1000 Doppelhübe bis zur Blasenbildung durchgeführt werden können.

2. Eindruckverhalten nach DIN 51 955

3. Eindruckverhalten in kurzzeitiger Stempeldurckprüfung (Prüfvorschrift für elastische Beläge gemäß DLW AG-interner Werksnorm):
Diese an DIN 51 955 angelehnte Prüfung dient zur kurzfristigen Ermittlung der Rückstellung und Härte des Belages. Als Prüfgerät werden ein Dickenmeßgerät (Durchmesser der ebenen Grundfläche des zylindrischen Drückstempels: 6 mm, Meßdruck: 0,03 N/mm$^2$) und ein Eindruckprüfgerät (Durchmesser der kreisförmigen Grundfläche des Eindrückstempels: 11,3 mm) gemäß Abs. 4.1 und 4.2 der DIN 51 955 verwendet. Drei Prüflinge (100x50 mm) werden über die Bahnbreite verteilt, wobei der Kantenabstand mindestens 50 mm beträgt. Vor der Prüfung werden die Prüflinge mindestens 48 Stunden im Normalklima nach DIN 50 014-23/50-2 gelagert. Die Durchführung der Prüfung erfolgt in folgenden Schritten:

- Dickenmessung und Markierung der Meßstelle
- Prüfling auf Eindruckgerät mittig plazieren, durch Drehen am Spindelrad Meßuhr in Nullstellung bringen, Vorkraft 3 N
- stoßfreie Belastung innerhalb von 5 Sekunden, Vollast 1 kN
- Eindrucktiefe nach einer Minute ablesen und Prüflast entfernen
- Prüfling verbleibt im Gerät, nach einer weiteren Minute wird unter Vorkraft der Resteindruck abgelesen.

Die Bestimmung der Rückstellung (Elastizität) und des Härte-Index (Index) wird mit Hilfe der folgenden Formeln berechnet:

$$\text{- Rückstellung (\%)}: \frac{\text{Eindruck (1 min) - Resteindruck (1 min)}}{\text{Eindruck (1 min)}} \times 100$$

$$\text{- Härte-Index, HE}: \frac{\text{Eindruck (1 min)}}{\text{Dicke mm}} \times 100$$

4. Dickenverlust nach 20 Zyklen nach DIN 51 963
5. Maß- und Formbeständigkeit nach DIN 51 962
6. Trennversuch der Schichten nach DIN 53 357
7. Brandprüfung nach DIN 4102

Soweit nicht anders angegeben sind alle Mengenangaben in Gew.-% und alle Temperaturangaben in °C.
Das nun folgende Beispiel soll die Erfindung weiter erläutern.

Beispiel:

Herstellung einer transparenten Deckschicht (Klarschicht)

| 25,0 | Lotryl®24 MA 005 | (Ethylen-Methylacrylat Copolymer) | Elf Ato-Chemie |
|---|---|---|---|
| 45,0 | Dowlex®2045 E | (Ethylen-Octen Copolymer) | DOW |
| 10,0 | Vestolen®P 5300 | (PE-PP-Random-Copolymer) | Hüls AG |
| 18,6 | Vistalon®808 E | (Ethylen-Propylen Kautschuk) | EXXON |
| 0,2 | Irganox®1010 | (Antioxidans) | Ciba-Geigy |
| 0,2 | Bärolub®FTA | (Stearinsäure, Gleitmittel) | Bärlocher |
| 1,0 | Tebestrat®BK | (Antistatikum) | Böhme |
| 100,0 | | | |

Alle vorstehenden Komponenten wurden in einem Wirbelmischer (Firma Henschel) gemischt und in einem Stempelkneter GK5 der Firma Werner & Pfleiderer ca. 5 Minuten plastifiziert. (Massetemperatur 190 bis 200 °C). Die plastifizierte Masse wurde auf ein Walzwerk (Firma Schwabenthan) bei einer Walzentemperatur von 185 °C gegeben, und weiter homogenisiert. Die Masse wurde dann auf einem 4-Walzenkalander (Firma Berstorff) zu einer Folie mit einer Dicke von 0,4 mm ausgezogen.

| Walze | Walzentemperaturen | Geschwindigkeit m/min. |
|---|---|---|
| 1: | 160 °C | 7 |
| 2: | 160 °C | 8,5 |
| 3: | 160 °C | 9,5 |
| 4: | 160 °C | 8,0 |

Man erhält auf diese Weise ein Produkt in Form einer Folie, das ausreichend transparent ist, um nach ggf. durchgeführter Hinterdruckung das Druckbild klar erkennen zu lassen.

Herstellung einer Zwischenschicht

| 24,7 | Dowlex®2045E | (Ethylen-Octen Copolymer) | DOW |
|---|---|---|---|
| 10,0 | Lotryl®24 MA 005 | (Ethylen-Methylacrylat-Copolymer) | Elf Ato-Chemie |
| 20,0 | Sillitin®N85 | (Quarz/Kaolinit) | Hoffmann Mineral |
| 40,0 | Omyacarb®6 | (Kreide) | Omya |
| 5,0 | Pigmente | (z.B. Titandioxid) | z.B. Kronos |
| 0,2 | Irganox®1010 | (Antioxidans) | Ciba-Geigy |
| 0,1 | Bärolub®FTA | (Stearinsäure) | Bärlocher |
| 100,0 | | | |

Alle vorstehenden Komponenten wurden in einem Wirbelmischer (Firma Henschel) gemischt und in einem Stempelkneter GK5 der Firma Werner & Pfleiderer ca. 5 Minuten pastifiziert. (Massetemperatur ca. 180 °C). Die Masse wurde von einem Walzwerk der Firma Schwabenthan (Walzentemperatur 140 °C) direkt einem 3-Walzenkalander (Firma Berstorff) zugeführt und auf ein Glasvlies SH 50 der Firma Schuller direkt beschichtet. (Foliendicke 0,3 mm).

| Walze | Walzentemperaturen | Geschwindigkeit m/min. |
|---|---|---|
| 1: | 130 °C | 8 |
| 2: | 130 °C | 8,7 |
| 3: | 130 °C | 9,5 |

Man erhält auf diese Weise eine Folie, welche mit einer verstärkenden Vlieseinlage versehen ist.

Herstellung einer Unterschicht

Rezeptur mit "Neumasse":

| 4,7 | Vestolen®5300 | (PE-PP-Random-Copolymer) | Hüls |
|---|---|---|---|
| 20,0 | Dowlex®2045E | (Ethylen-Octen-Copolymer) | DOW |
| 10,0 | Lotryl®24 MA005 | (Ethylen-Methylacrylat Copolymer) | Elf Ato-Chemie |
| 10,0 | Sillitin®N 85 | (Quarz/Kaolinit) | Hoffmann Mineral |
| 50,0 | Omyacarb®6 | (Kreide) | Omya |
| 5,0 | Pigmente | (z.B. Titandioxid) | z.B. Kronos |
| 0,2 | Irganox®1076 | (Antioxidans) | Ciba-Geigy |
| 0,1 | Bärolub®FTA | (Stearinsäure) | Bärlocher |
| 100,0 | | | |

Rezeptur mit Recyclat:

Anstelle der oben aufgeführten Neumasserezeptur kann ebenso anteilig gemahlener Randstreifenabfall eines fertigen Belages oder auch Fremdrecyclat in Mengen von bis zu 50 %, bezogen auf die Gesamtmenge der Schicht, eingesetzt werden.

Die Rezeptbestandteile wurden in einem Wirbelmischer (Firma Henschel) gemischt und in einem Stempelkneter GK5 der Firma Werner & Pfleiderer ca. 4 Minuten plastifiziert. (Massetemperatur 180 bis 190 °C). Die Masse wurde auf einem Walzwerk der Firma Schwabenthan (Walzentemperatur 150 °C) direkt einem 4-Walzenkalander (Firma Berstorff) zugeführt und eine Folie mit einer Dicke von 0,5 mm hergestellt.

EP 0 710 179 B1

| Walze | Walzentemperaturen | Geschwindig-keit m/min. |
|---|---|---|
| 1: | 140 °C | 10 |
| 2: | 140 °C | 11,5 |
| 3: | 145 °C | 12,5 |
| 4: | 145 °C | 11,5 |

Bedrucken der Zwischenschicht

Die wie vorstehend hergestellte Zwischenschicht wurde auf einer 4-Farben Tiefdruckmaschine der Firma Dornbusch, von Rolle zu Rolle, mit Zwischen- und Endtrocknung bedruckt. Verwendet wurde eine Druckfarbe der Firma K + E, Stuttgart im Sonderfarbenbereich. Das Bindemittel wurde auf das Substrat abgestimmt. Das Drucksubstrat wurde vor dem Druckvorgang einer Koronaentladung unterzogen. (Geschwindigkeit ca. 40 m/min.).

Trocknungstemperaturen:

| | |
|---|---|
| Kanal 1 | 40 °C |
| Kanal 2 | 40 °C |
| Kanal 3 | 40 °C |
| Endkanal | 60 °C |

Der Trockenauftrag der Druckfarbe lag bei ca. 15 bis 20 g/m$^2$ bei vollflächiger Bedruckung je Druckzylinder.

Verbinden der Einzelfolien

Die Einzelfolien wurden zu folgendem Gesamtaufbau verschweißt:

| | |
|---|---|
| Deckschicht (Klarschicht) | 0,4 mm |
| Zwischenschicht mit Trägervlies, bedruckt | 0,3 mm |
| Unterschicht dreifach | je 0,5 mm |
| | 2,2 mm ± 0,1 mm |

Dazu wurden alle Einzelschichten (Folien) auf einem Reyon-Mitläufer der Firma Mehler einer Gummibandauma (Firma Berstorff) zugeführt und bei einer Trommeltemperatur von 100 °C zum Gesamtverbund verschweißt. Die Unterschicht und Zwischenschicht wurden vorab mittels IR-Stahler auf eine Oberflächentemperatur von 180 °C erwärmt. Geschwindigkeit des Bandes 2 m/min, Banddruck 200 bar = 4 bar Partialdruck. Anschließend wurde der Belag im gleichen Arbeitsgang mit einer reverse laufenden Walzenauftragsvorrichtung mit einem 100 %igen, UV-vernetzbaren Lack (Type LM 720, Firma Lott, Bielefeld) mit einer Auftragsmenge von 15 bis 20 g/m$^2$ beschichtet. Die Vernetzung des Lacks erfolgte in einem nachgeschalteten UV-Kanal, der mit 4 UV-Stahlern mit einer jeweiligen Leistung von 120 Watt/cm, regelbar zwischen 50 und 100 % bestückt war. Der erste Stahler war zur Glanzregulierung in der Höhe verstellbar.

Die auf diese Weise erhaltene mehrschichtige Kunststoffbahn weist folgende, für Bodenbeläge spezifizierende Eigenschaften auf:

**Dicke:**

2,25 ± 0,1 mm

**Walkbeständigkeit im Kugelwalk-Versuch (DLW AG-interne Werksnorm):**

> 5.000 Doppelhübe bis zur Blasenbildung

**Eindruckverhalten nach DIN 51 955:**

| | |
|---|---|
| Ausgangsdicke: | 2,29 mm |
| Eindruck (150 min): | 0,48 mm |
| Resteindruck: | 0,11 mm |
| Rückstellung (150 min): | 77,1 % |
| Index: | 21,0 |

**Eindruckverhalten in kurzzeitiger Stempeldruckprüfung (DLW AG-interne Werksnorm):**

| | |
|---|---|
| Ausgangsdicke: | 2,29 mm |
| Eindruck (1 min): | 0,45 mm |
| Resteindruck (1 min): | 0,12 mm |
| Elastizität: | 73,3 % |
| Index: | 19,7 |

**Dickenverlust nach DIN 51 963:**

| | |
|---|---|
| nach 20 Zyklen: | 0,07 mm |

**Maß- und Formbeständigkeit nach DIN 51 962:**

| | |
|---|---|
| längs: | - 0,17 mm |
| quer: | + 0,14 mm |
| Schüsselung nicht meßbar | |

**Trennversuch der Schichten nach DIN 53 357:**

| Trennung an Nutz-chicht, Schälwider-stand: | |
|---|---|
| längs: | 38,6 N/5 cm |
| quer: | 37,2 N/5 cm |

**Brandprüfung nach DIN 4102:**

B2

**Patentansprüche**

1. Mehrschichtige Bodenbelags-Kunststoffbahn oder -platte aus einer Deckschicht und mindestens einer weiteren Schicht, dadurch gekennzeichnet, daß mindestens eine Schicht mindestens ein Ethylen-Alkylacrylat-Copolymer aufweist.

2. Mehrschichtige Bodenbelags-Kunststoffbahn oder -platte nach Anspruch 1, dadurch gekennzeichnet, daß die Deckschicht transparent ist.

3. Mehrschichtige Bodenbelags-Kunststoffbahn oder -platte nach Anspruch 1 oder 2, dadurch gekennzeichnet, daß die Deckschicht mindestens ein Ethylen-Alkylacrylat-Copolymer aufweist.

4. Mehrschichtige Bodenbelags-Kunststoffbahn oder -platte nach einem der vorhergehenden Ansprüche, dadurch gekennzeichnet, daß das Ethylen-Alkylacrylat-Copolymer 4 bis 30 Gew.% Alkylacrylat enthält.

5. Mehrschichtige Bodenbelags-Kunststoffbahn oder -platte nach einem der vorhergehenden Ansprüche, dadurch gekennzeichnet, daß die Deckschicht 5 bis 70 Gew.% mindestens eines Ethylen-Alkylacrylat-Copolymers enthält.

6. Mehrschichtige Bodenbelags-Kunststoffbahn oder -platte nach einem der vorhergehenden Ansprüche, dadurch gekennzeichnet, daß das Alkylacrylat im Copolymer ein Methylacrylat, Ethylacrylat, Butylacrylat oder ein beliebiges Gemisch davon ist.

7. Mehrschichtige Bodenbelags-Kunststoffbahn oder -platte nach Anspruch 6, dadurch gekennzeichnet, daß das Alkylacrylat Ethylacrylat ist.

8. Mehrschichtige Bodenbelags-Kunststoffbahn oder -platte nach einem der vorhergehenden Ansprüche, dadurch gekennzeichnet, daß das Ethylen-Alkylacrylat-Copolymer ein statistisches Copolymer oder ein Blockcopolymer ist.

9. Mehrschichtige Bodenbelags-Kunststoffbahn oder -platte nach Anspruch 8, dadurch gekennzeichnet, daß das Ethylen-Alkylacrylat-Copolymer ein statistisches Copolymer ist.

10. Mehrschichtige Bodenbelags-Kunststoffbahn oder -platte nach einem der vorhergehenden Ansprüche, dadurch gekennzeichnet, daß die Deckschicht zusätzlich wenigstens ein weiteres Polymer enthält.

11. Mehrschichtige Bodenbelags-Kunststoffbahn oder -platte nach Anspruch 10, dadurch gekennzeichnet, daß das weitere Polymer ein Homo- oder Copolymer von ethylenisch ungesättigten Verbindungen oder ein beliebiges Gemisch davon ist.

12. Mehrschichtige Bodenbelags-Kunststoffbahn oder -platte nach Anspruch 11, dadurch gekennzeichnet, daß das weitere Polymer mindestens ein Polymer ist, ausgewählt aus Homo- oder Copolymer von Ethylen und/oder Propylen, isotaktisches Polypropylen, Copolymer von Ethylen mit mindestens einem weiteren Alken mit bis zu 10 Kohlenstoffatomen, EPDM-Terpolymer, EPM-Kautschuk, SIS- und/oder SBS-Blockcopolymer, PE-HMW und PE-UHMW.

13. Mehrschichtige Bodenbelags-Kunststoffbahn oder -platte nach einem der vorhergehenden Ansprüche, dadurch gekennzeichnet, daß die Kunststoffbahn eine durch Hinterdrucken der transparenten Deckschicht und/oder Bedrucken der darunterliegenden Zwischenschicht aufgebrachte Musterung aufweist.

14. Mehrschichtige Bodenbelags-Kunststoffbahn oder -platte nach einem der vorhergehenden Ansprüche, dadurch gekennzeichnet, daß die Deckschicht zusätzlich übliche Hilfsstoffe aufweist.

15. Mehrschichtige Bodenbelags-Kunststoffbahn oder -platte nach Anspruch 14, dadurch gekennzeichnet, daß die Hilfsstoffe mindestens ein Antistatikum und/oder ein Antioxidans umfassen.

16. Mehrschichtige Bodenbelags-Kunststoffbahn oder -platte nach einem der vorhergehenden Ansprüche, dadurch gekennzeichnet, daß die Deckschicht auf ihrer Oberseite ein übliches Finish oder einen Lack aufweist.

17. Mehrschichtige Bodenbelags-Kunststoffbahn oder -platte nach Anspruch 16, dadurch gekennzeichnet, daß die Oberseite der Deckschicht vor dem Aufbringen des Finishs oder Lacks einer Koronaentladung unterzogen wurde.

18. Mehrschichtige Bodenbelags-Kunststoffbahn oder -platte nach einem der vorhergehenden Ansprüche, dadurch gekennzeichnet, daß mindestens eine weitere Schicht einen Gehalt an einem polymeren Bindemittel, üblichen Füllstoffen und gegebenenfalls Hilfsstoffen aufweist.

19. Mehrschichtige Bodenbelags-Kunststoffbahn oder -platte nach einem der vorhergehenden Ansprüche, dadurch gekennzeichnet, daß mindestens eine weitere Schicht ein Recyclat aufweist.

20. Mehrschichtige Bodenbelags-Kunststoffbahn oder -platte nach einem der vorhergehenden Ansprüche, dadurch gekennzeichnet, daß die Kunststoffbahn an der Unterseite zusätzlich eine Wärme- und/oder Schallschutzschicht aufweist.

21. Verfahren zur Herstellung von mehrschichtigen Bodenbelags-Kunststoffbahnen oder -platten nach einem der Ansprüche 1 bis 20, dadurch gekennzeichnet, daß die Deckschicht, die Zwischenschicht und gegebenenfalls mindestens eine weitere Schicht (Unterschicht) separat hergestellt werden, indem die Komponenten der Schichten vorgemischt und plastifiziert werden, anschließend die plastifizierte Masse in geeigneter Weise in die Form einer flächigen Schicht gebracht wird, wobei gegebenenfalls mindestens die Zwischenschicht oder eine Unterschicht mit einem Vlies oder einem Armierungsgewebe versehen wird, danach gegebenenfalls die Unterseite der Deckschicht hinterdruckt und/oder die Oberseite der darunterliegenden Zwischenschicht bedruckt wird, und die erhaltenen Schichten in an sich bekannter Weise miteinander verschweißt werden und der verschweißte Verbund gegebenenfalls auf seiner Unterseite mit einer Wärme- und/oder Schallschutzschicht versehen wird.

**Claims**

1. Multilayer plastics sheet or tile for floor coverings, comprising a top layer and at least one further layer, characterized in that at least one layer contains at least one ethylene/alkyl acrylate copolymer.

2. Multilayer plastics sheet or tile for floor coverings, according to Claim 1, characterized in that the top layer is transparent.

3. Multilayer plastics sheet or tile for floor coverings, according to Claim 1 or 2, characterized in that the top layer contains at least one ethylene/alkyl acrylate copolymer.

4. Multilayer plastics sheet or tile for floor coverings, according to any of the preceding claims, characterized in that the ethylene/alkyl acrylate copolymer contains from 4 to 30% by weight of alkyl acrylate.

5. Multilayer plastics sheet or tile for floor coverings, according to any of the preceding claims, characterized in that the top layer contains from 5 to 70% by weight of at least one ethylene/alkyl acrylate copolymer.

6. Multilayer plastics sheet or tile for floor coverings, according to any of the preceding claims, characterized in that the alkyl acrylate in the copolymer is a methyl acrylate, ethyl acrylate or butyl acrylate or any desired mixture thereof.

7. Multilayer plastics sheet or tile for floor coverings, according to Claim 6, characterized in that the alkyl acrylate is ethyl acrylate.

8. Multilayer plastics sheet or tile for floor coverings, according to any of the preceding claims, characterized in that the ethylene/alkyl acrylate copolymer is a random copolymer or a block copolymer.

9. Multilayer plastics sheet or tile for floor coverings, according to Claim 8, characterized in that the ethylene/alkyl acrylate copolymer is a random copolymer.

10. Multilayer plastics sheet or tile for floor coverings, according to any of the preceding claims, characterized in that the top layer additionally contains at least one further polymer.

11. Multilayer plastics sheet or tile for floor coverings, according to Claim 10, characterized in that the further polymer is a homopolymer or copolymer of ethylenically unsaturated compounds or any desired mixture thereof.

12. Multilayer plastics sheet or tile for floor coverings, according to Claim 11, characterized in that the further polymer is at least one polymer selected from homopolymer or copolymer of ethylene and/or propylene, isotactic polypropylene, copolymer of ethylene with at least one further alkene having up to 10 carbon atoms, EPDM terpolymer, EPM rubber, SIS and/or SBS block copolymer, HMWPE and UHMWPE.

13. Multilayer plastics sheet or tile for floor coverings, according to any of the preceding claims, characterized in that the plastics sheet has a pattern applied by printing the back of the transparent top layer and/or printing the intermediate layer underneath.

14. Multilayer plastics sheet or tile for floor coverings, according to any of the preceding claims, characterized in that the top layer additionally contains customary auxiliaries.

15. Multilayer plastics sheet or tile for floor coverings, according to Claim 14, characterized in that the auxiliaries comprise at least one antistatic agent and/or one antioxidant.

16. Multilayer plastics sheet or tile for floor coverings, according to any of the preceding claims, characterized in that the top layer has a customary finish or a surface coating on its upper surface.

17. Multilayer plastics sheet or tile for floor coverings, according to Claim 16, characterized in that the upper surface of the top layer was subjected to a corona discharge before application of the finish or surface coating.

18. Multilayer plastics sheet or tile for floor coverings, according to any of the preceding claims, characterized in that at least one further layer contains a polymeric binder, customary fillers and optionally auxiliaries.

19. Multilayer plastics sheet or tile for floor coverings, according to any of the preceding claims, characterized in that at least one further layer contains a recycled material.

20. Multilayer plastics sheet or tile for floor coverings, according to any of the preceding claims, characterized in that the plastics sheet additionally has a thermal insulation and/or sound insulation layer on the lower surface.

21. Process for the production of multilayer plastics sheet or tile for floor coverings, according to any of Claims 1 to 20, characterized in that the top layer, the intermediate layer and optionally at least one further layer (lower layer) are separately produced by premixing and plasticating the components of the layers and then bringing the plasticated material in a suitable manner into the form of a sheet-like layer, at least the intermediate layer or a lower layer optionally being provided with a nonwoven or a reinforcing fabric, optionally the lower surface of the top layer is printed on the back and/or the upper surface of the intermediate layer underneath is printed, and the layers obtained are welded to one another in a manner known per se and the welded composite is optionally provided on its lower surface with a thermal insulation and/or sound insulation layer.

## Revendications

1. Bande ou plaque de plastique de revêtement de sol multicouche en une couche de recouvrement et au moins une autre couche, caractérisée par le fait qu'au moins une couche comporte au moins un copolymère d'acrylate d'alkyleéthylène.

2. Bande ou plaque de plastique de revêtement de sol multicouche selon la revendication 1, caractérisée par le fait que la couche de recouvrement est transparente.

3. Bande ou plaque de plastique de revêtement de sol multicouche selon la revendication 1 ou 2, caractérisée par le fait que la couche de recouvrement comporte au moins un copolymère d'acrylate d'alkyle-éthylène.

4. Bande ou plaque de plastique de revêtement de sol multicouche selon l'une des revendications précédentes, caractérisée par le fait que le copolymère d'acrylate d'alkyle-éthylène contient 4 à 30% en poids d'acrylate d'alkyle .

5. Bande ou plaque de plastique de revêtement de sol multicouche selon l'une des revendications précédentes, caractérisée par le fait que la couche de recouvrement contient 5 à 70% en poids d'au moins un copolymère d'acrylate d'alkyle-éthylène.

6. Bande ou plaque de plastique de revêtement de sol multicouche selon l'une des revendications précédentes, caractérisée par le fait que l' acrylate d'alkyle dans le copolymère est un acrylate de méthyle, un acrylate d' éthyle, un acrylate de butyle,ou un mélange quelconque de ceux-ci.

7. Bande ou plaque de plastique de revêtement de sol multicouche selon la revendication 6, caractérisée par le fait que l' acrylate d'alkyle est de l'acrylate d'éthyle .

8. Bande ou plaque de plastique de revêtement de sol multicouche selon l'une des revendications précédentes, caractérisée par le fait que le copolymère d'acrylate d'alkyle-éthylène est un copolymère statistique ou un copolymère bloc.

9. Bande ou plaque de plastique de revêtement de sol multicouche selon la revendication 8 , caractérisée par le fait que le copolymère d'acrylate d'alkyle-éthylène est un copolymère statistique.

10. Bande ou plaque de plastique de revêtement de sol multicouche selon l'une des revendications précédentes, caractérisée par le fait que la couche de recouvrement contient en plus au moins un autre polymère.

11. Bande ou plaque de plastique de revêtement de sol multicouche selon la revendication 10, caractérisée par le fait que l'autre polymère est un homo- ou copolymère de composés non saturés éthyléniques ou un mélange quelconque de ceux-ci.

12. Bande ou plaque de plastique de revêtement de sol multicouche selon la revendication 11, caractérisée par le fait que l'autre polymère est au moins un polymère choisi parmi un homo- ou copolymère d'éthylène et/ou de propylène, un polypropylène isotactique, un copolymère d'éthylène avec au moins un autre alcène comportant jusqu'à 10 atomes de carbone, un terpolymère-EPDM, un caoutchouc-EPM, un copolymère bloc - SBS et/ou -SIS, un PE-HMW et un PE-UHMW.

13. Bande ou plaque de plastique de revêtement de sol multicouche selon l'une des revendications précédentes , caractérisée par le fait que la bande de plastique comporte un dessin mis en place par impression arrière de la couche de recouvrement transparente et/ou impression de la couche intermédiaire sous-jacente .

14. Bande ou plaque de plastique de revêtement de sol multicouche selon l'une des revendications précédentes , caractérisée par le fait que la couche de recouvrement comporte en plus des agents auxiliaires usuels.

15. Bande ou plaque de plastique de revêtement de sol multicouche selon la revendication 14 , caractérisée par le fait que les agents auxiliaires comprennent au moins un antistatique et/ou un anti-oxydant.

16. Bande ou plaque de plastique de revêtement de sol multicouche selon l'une des revendications précédentes, caractérisée par le fait que la couche de recouvrement présente sur sa face supérieure une couche de finition ou une laque usuelle.

17. Bande ou plaque de plastique de revêtement de sol multicouche selon la revendication 16, caractérisée par le fait que la face supérieure de la couche de recouvrement a été soumise à une décharge en effet corona avant la mise en place de la couche de finition ou de la laque.

18. Bande ou plaque de plastique de revêtement de sol multicouche selon l'une des revendications précédentes, caractérisée par le fait qu'au moins une autre couche présente une teneur en un liant polymère, en charges usuelles et le cas échéant en agents auxiliaires.

19. Bande ou plaque de plastique de revêtement de sol multicouche selon l'une des revendications précédentes, caractérisée par le fait qu'au moins une autre couche comporte une matière recyclée.

20. Bande ou plaque de plastique de revêtement de sol multicouche selon l'une des revendications précédentes, caractérisée par le fait que la bande plastique comporte en plus une couche d'isolation thermique et/ou acoustique sur sa face inférieure.

21. Procédé de fabrication de bandes ou plaques de plastique de revêtement de sol multicouches selon l'une des revendications 1 à 20, caractérisée par le fait que la couche de recouvrement, la couche intermédiaire et le cas échéant au moins une autre couche ( couche inférieure ) sont fabriquées séparément , attendu que les composants des couches sont prémélangés et plastifiés, qu'ensuite la masse plastifiée est amenée de manière appropriée sous la forme d'une couche plate, le cas échéant au moins la couche intermédiaire ou une couche inférieure étant munie d'un non-tissé ou d'un tissu à armure, qu'ensuite le cas échéant la face inférieure de la couche de recouvrement est imprimée sur l'arrière et/ou la face supérieure de la couche intermédiaire sous-jacente est imprimée, et les couches obtenues sont soudées l'une à l'autre d'une manière connue en elle-même et le composite soudé est muni le cas échéant sur sa face inférieure d'une couche d'isolation thermique et/ou acoustique.